# EUROPEAN PATENT APPLICATION

(11) **EP 4 753 054 A1**
(43) Date of publication of application: **03.06.2026**
(21) Application number: 25786858.8
(22) Date of filing: 07.03.2025
(51) Int. Cl.: H01M 50/367, H01M 50/289, H01M 50/233, H01M 50/227, H01M 50/249, F16B 33/00, F16B 35/04

(54) **BATTERY PACK AND VEHICLE INCLUDING SAME**

(30) Priority: 08.04.2024 KR 20240047650
(71) Applicant: LG Energy Solution, Ltd., Seoul 07335 (KR)
(72) Inventor: PARK, Shin-Young, Daejeon 34122 (KR); MUN, Jeong-O, Daejeon 34122 (KR); SEO, Sung-Won, Daejeon 34122 (KR); LEE, Sang-Joon, Daejeon 34122 (KR); HWANG, Tae-Won, Daejeon 34122 (KR)
(74) Representative: Hoffmann Eitle
(86) International application number: PCT/KR2025/099632
(87) International publication number: WO 2025/216618

(57) **Abstract**

A battery pack according to the present disclosure may include: a pack case having a storage space configured to store a plurality of battery cells therein and an opening formed on one side; a pack lid configured to cover the opening; a partition frame coupled to the pack case so as to partition the storage space; a bolt member having at least a portion passing through the pack lid, and coupled to the partition frame; and a connection member having one side fastened to the partition frame and the other side fastened to the bolt member, wherein at least a portion of the connection member may be formed of a high-temperature sensitive material configured to change in its properties in a predetermined high-temperature environment, thereby weakening retention force between the bolt member and the partition frame.

## Description

### TECHNICAL FIELD

The present disclosure relates to a battery pack and, more specifically, to a battery pack in which the pack lid bulges upward in response to internal pressure increased when a thermal event occurs in the battery pack, thereby reducing the internal pressure of the battery pack, slowing down the rate of increase in internal pressure, and delaying thermal propagation.

This application is based on and claims priority from Korean Patent Application No. 10-2024-0047650, filed on April 08, 2024, with the Korean Intellectual Property Office, the disclosure of which is incorporated herein in its entirety by reference.

### BACKGROUND ART

Semi-permanent batteries that convert electrical energy into chemical energy and undergo repeated charging and discharging are called secondary batteries distinguished from primary batteries that cannot be reused after use.

In particular, lithium-ion secondary batteries have high energy storage density, are capable of being lightweight and compact, and have advantages such as excellent safety, a low discharge rate, and a long lifespan, so they are widely used as electric vehicle batteries nowadays. For reference, lithium-ion secondary batteries are generally classified into cylindrical, prismatic, and pouch types depending on their manufacturing types, and their applications are diverse, ranging from electric vehicle batteries to energy storage systems (ESS) batteries and various other electrical devices.

Currently, the operating voltage of one lithium-ion secondary battery cell is approximately 2.5V to 4.5V. Therefore, in order to apply secondary batteries to an energy source for electric vehicles, a plurality of lithium-ion battery cells are connected in series and/or parallel to configure a battery module, and then the battery modules are connected in series and/or parallel to produce a battery pack.

Meanwhile, since secondary batteries involve chemical reactions during charging and discharging, their performance may deteriorate when used at a temperature higher than the appropriate temperature, and a failure in controlling the heat to an appropriate temperature may lead to unintended ignition or explosion. In addition, since the battery module, which is an assembly of secondary batteries, has a structure in which the secondary batteries are stored as densely as possible inside a pack case, and thus may be vulnerable to a thermal event.

Accordingly, when a thermal event such as overheating or thermal runaway occurs in a specific battery module, the internal pressure of the battery pack may increase due to venting gas, flame, and the like generated from the battery module where the event has occurred, and the accumulation of thermal energy may be accelerated, thereby causing thermal propagation to adjacent battery modules. This may lead to a problem of serial thermal runaway of the battery modules and explosion of the entire battery pack.

Accordingly, it is necessary to improve the structure of the battery pack to reduce the increased internal pressure of the battery pack due to venting gas and flames generated from the thermal event in the initially ignited battery module and effectively dissipate the heat energy, thereby delaying successive thermal propagation to neighboring battery modules.

### DISCLOSURE

### Technical Problem

The present disclosure is designed to solve the problems of the related art, and therefore the present disclosure is directed to providing a battery pack with reinforced structural rigidity and a vehicle including the same.

The present disclosure is also to provide a battery pack with reinforced retention force between a bolt member and a partition frame, and a vehicle including the same.

The present disclosure is also to provide a battery pack capable of effectively preventing thermal propagation due to a reduction in the retention force between a bolt member and a partition frame when a thermal event occurs inside the battery pack, and a vehicle including the same.

The present disclosure is also to provide a battery pack capable of effectively preventing thermal propagation by enabling the pack lid to bulges when a thermal event occurs inside the battery pack, and a vehicle including the same.

The present disclosure is also to provide a battery pack with improved assemblability and productivity of a pack case, and a vehicle including the same.

The present disclosure is also to provide a battery pack with improved structural stability and a vehicle including the same.

The present disclosure is also to provide a battery pack capable of effectively preventing thermal propagation by preventing the inflow of oxygen and the eruption of flame, and a vehicle including the same.

The technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a pack case having a storage space configured to store a plurality of battery cells therein and an opening formed on one side; a pack lid configured to cover the opening; a partition frame coupled to the pack case so as to partition the storage space; a bolt member having at least a portion passing through the pack lid, and coupled to the partition frame; and a connection member having one side fastened to the partition frame and the other side fastened to the bolt member, wherein at least a portion of the connection member may be formed of a high-temperature sensitive material configured to change in its properties in a predetermined high-temperature environment, thereby weakening retention force between the bolt member and the partition frame.

The pack lid may be configured to bulge when internal pressure of the storage space increases.

The high-temperature sensitive material may be configured as a resin material.

The pack lid may be disposed above the partition frame, and the bolt member may be disposed at a higher position than the partition frame by the connection member.

The connection member may include a first connection portion fastened to the partition frame, and a second connection portion coupled to the first connection portion and to which the bolt member is fastened, and the second connection portion may be made of the high-temperature sensitive material.

The second connection portion may have at least a portion exposed to the storage space.

The first connection portion may include a metal material.

Male threads may be formed on one side of the connection member, and the partition frame may have a fastening hole formed to have female threads formed to be fastened to the male threads of the connection member.

The partition frame may have an insertion hole formed therein such that the remaining portion of the connection member, excluding the male threads, is at least partially inserted thereinto, and the fastening hole may be formed inside the insertion hole.

The connection member may include a first connection portion fastened to the partition frame, and a second connection portion coupled to the first connection portion and to which the bolt member is fastened, and the first connection portion may include the high-temperature sensitive material.

The battery pack may further include an intermediate member disposed between the pack lid and the connection member, and through which the bolt member passes.

The intermediate member may be in close contact with the pack lid and the connection member.

The intermediate member may be configured as a bonding nut having female threads formed on its inner side and at least a portion bonded to the pack lid.

The battery pack may further include a sealing member disposed between the pack lid and the bolt member to seal them.

In another aspect of the present disclosure, there is provided a vehicle including at least one battery pack according to the present disclosure.

### Advantageous Effects

According to the present disclosure, it is possible to provide a battery pack with reinforced structural rigidity by the bolt member and the connection member, and a vehicle including the same.

In addition, according to the present disclosure, it is possible to provide a battery pack with reinforced retention force between the bolt member and the partition frame by the connection member, and a vehicle including the same.

In addition, according to the present disclosure, it is possible to provide a battery pack capable of effectively preventing thermal propagation due to a reduction in the retention force between the bolt member and the partition frame when a thermal event occurs inside the battery pack, and a vehicle including the same.

In addition, according to the present disclosure, it is possible to provide a battery pack capable of effectively preventing thermal propagation by enabling the pack lid to bulge upward when a thermal event occurs inside the battery pack, and a vehicle including the same.

In addition, according to the present disclosure, it is possible to provide a battery pack with improved assemblability and productivity of a pack case by the bolt member and the connection member, and a vehicle including the same.

In addition, according to the present disclosure, it is possible to provide a battery pack with further improved assemblability, productivity, and structural stability by the intermediate member, and a vehicle including the same.

In addition, according to the present disclosure, it is possible to provide a battery pack capable of effectively preventing thermal propagation by preventing the inflow of oxygen and the eruption of flame by the intermediate member or sealing member, and a vehicle including the same.

The effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view of a battery pack according to an embodiment of the present disclosure.
FIG. 2 is an exploded perspective view of the battery pack in FIG. 1.
FIG. 3 is a cross-sectional view illustrating a bolt member and a connection member fastened in a battery pack according to an embodiment of the present disclosure.
FIG. 4 is an exploded perspective view illustrating a bolt member and a connection member in a battery pack according to an embodiment of the present disclosure.
FIG. 5 is a cross-sectional view illustrating a bolt member and a connection member fastened in a battery pack when viewed from another direction according to an embodiment of the present disclosure.
FIG. 6 is a cross-sectional view taken along line A - A' in FIG. 1.
FIG. 7 is a cross-sectional view illustrating a state in which the pack lid in FIG. 6 bulges upward.
FIG. 8 is a perspective view illustrating a connection member of a battery pack according to another embodiment of the present disclosure.
FIG. 9 is a cross-sectional view illustrating a state in which an intermediate member is further disposed on a bolt member and a connection member in a battery pack according to an embodiment of the present disclosure.
FIG. 10 is a cross-sectional view illustrating a state in which a sealing member is further disposed on a bolt member and a connection member in a battery pack according to an embodiment of the present disclosure.
FIG. 11 is a drawing illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

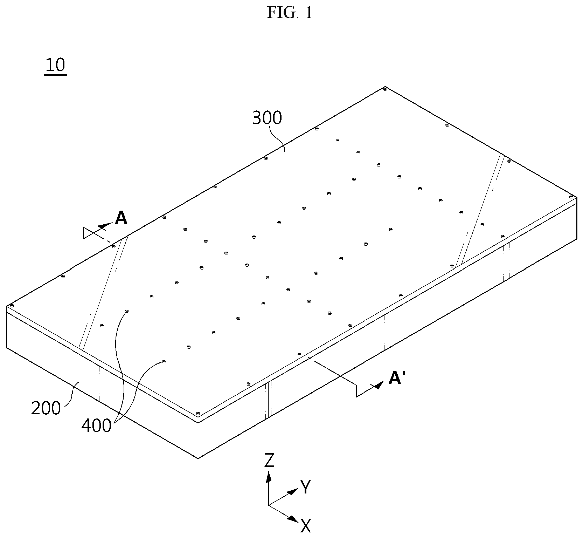

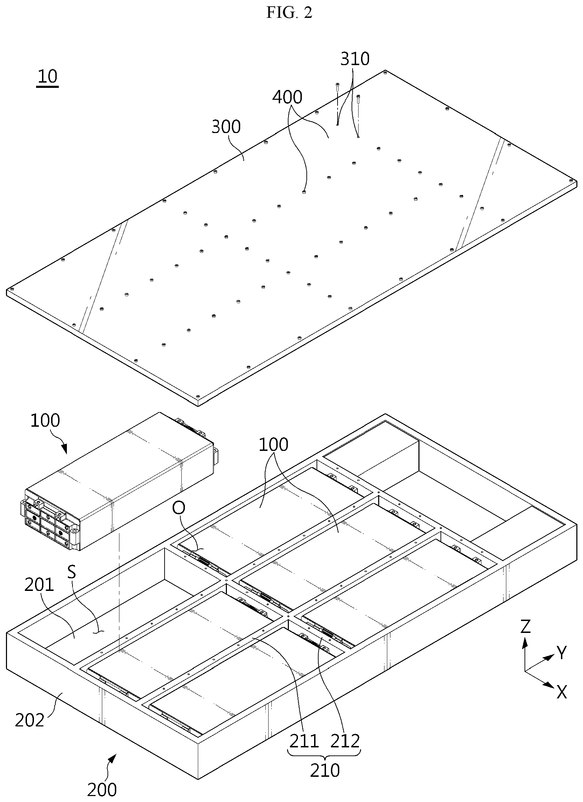

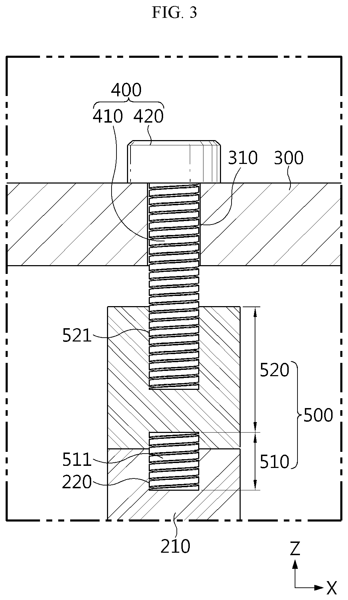

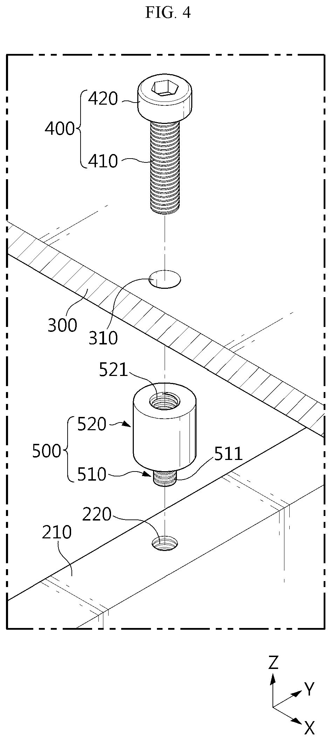

FIG. 1 is a perspective view of a battery pack according to an embodiment of the present disclosure, FIG. 2 is an exploded perspective view of the battery pack in FIG. 1, FIG. 3 is a cross-sectional view illustrating a bolt member and a connection member fastened in a battery pack according to an embodiment of the present disclosure, and FIG. 4 is an exploded perspective view illustrating a bolt member and a connection member in a battery pack according to an embodiment of the present disclosure.

Hereinafter, a battery pack 10 according to an embodiment of the present disclosure will be described in detail with reference to FIGS. 1 to 4. The battery pack 10 according to an embodiment of the present disclosure includes a pack case 200, a pack lid 300, a partition frame 210, a bolt member 400, and a connection member 500.

The pack case 200 have a storage space S and an opening O formed therein. A plurality of battery cells 100 are stored in the storage space S. The battery cell 100 may be understood as a secondary battery including an electrode assembly and a pouch case that stores an electrolyte and the electrode assembly. Although the present embodiment will be described based on a pouch-type battery cell 100 having a high energy density and easy stacking, the present disclosure is not limited thereto, and it is obvious that a cylindrical or prismatic secondary battery may be applied to the battery cell 100.

The pouch-type battery cell 100 may include a pair of electrode leads that are connected to the electrode assembly and extend outward from the pouch case, thereby functioning as electrode terminals. The battery cell 100 may further include electrical components such as a bus-bar, a bus-bar frame, and a module connector mounted adjacent to the pair of electrode leads.

The battery cells 100 may be stored inside the storage space S of the pack case 200 in units of battery modules. In this case, the battery module may include a module case. At least one battery cell 100 may be stored in the module case. The module case may be made of a metal material with high rigidity and durability or a plastic material such as ABS resin to physically or chemically protect the stored battery cells 100. Terminals of the battery module may be provided on the side of the module case. The terminal may be either a positive electrode terminal or a negative electrode terminal and disposed on both sides or one side of the module case.

The storage space S is formed inside the pack case 200. The pack case 200 includes a bottom 201 and a side wall 202 surrounding the bottom 201, and the bottom 201 and the side wall 202 form the storage space S therein.

A partition frame 210 is coupled to the pack case 200. The partition frame 210 is coupled to the pack case 200 so as to partition the storage space S. The partition frame 210 may be disposed across the storage space S. The partition frame 210 may include a horizontal frame 211 and a vertical frame 212. The horizontal frame 211 may be formed to extend in the Y-axis direction and partition the storage space S along the X-axis direction. The vertical frame 212 may be formed to extend in the X-axis direction and partition the storage space S along the Y-axis direction. In the present disclosure, although the pack case 200 is illustrated as having two horizontal frames 211 and one vertical frame 212, the number of horizontal frames 211 and vertical frames 212 or the number of battery cells 100 stored is not limited thereto and may vary. The horizontal frame 211 or vertical frame 212 may also be referred to as a cross-beam or a center beam.

In order to withstand the load of the battery cells 100 and protect the battery cells 100 from external force, the pack case 200 and the partition frame 210 may be made of a metal material such as steel or aluminum.

The opening O is formed on one side of the pack case 200. In the illustrated example, the opening O may be formed on the upper side of the pack case 200. A pack lid 300 is disposed on the opening O. The pack lid 300 is disposed to cover the opening O. The pack lid 300 may cover the storage space S of the pack case 200 to isolate the storage space S from the outside. The pack lid 300 may be configured to have a shape corresponding to the shape of the opening O. For example, if the opening O has a rectangular shape, the pack lid 300 may also be configured in a rectangular shape. The pack lid 300 may be configured to be slightly larger than the opening O so as to cover the edge of the opening O. The pack lid 300 may be configured in the form of a thin plate. For example, the pack lid 300 may be configured in the form of a rectangular thin plate. The pack lid 300 may be made of a metal material such as aluminum, which is the same as or similar to the pack case 200 and the partition frame 210. As another example, the pack lid 300 may be made of a material capable of being elastically deformed or plastically deformed by an external force.

The bolt member 400 is configured such that at least a portion thereof passes through the pack lid 300 and is connected to the partition frame 210. A plurality of bolt members 400 may be provided. The bolt member 400 may pass through in a direction parallel to the Z-axis direction. The bolt member 400 may be coupled to the partition frame 210 by being fastened to the connection member 500.

The bolt member 400 may be configured such that at least a portion thereof extends toward one end, and at least a portion of the one end may pass through the pack lid 300. The bolt member 400 may include a screw portion 410 formed with male threads, and further include a head 420, and the screw portion 410 may pass through the pack lid 300. The bolt member 400 may be made of a metal material such as steel/SUS. Such a material is resistant to high temperatures, has excellent rigidity, and ensures high fastening force.

The pack lid 300 may have a through-hole 310 through which the bolt member 400 passes. A plurality of through-holes 310 corresponding to the number of bolt members 400 may be formed at positions corresponding to the positions of the bolt members 400. Since the through-hole 310 does not have female threads, the screw portion 410 of the bolt member 400 may simply pass through the through-hole 310, and the head 420 may be supported on the upper surface of the pack lid 300 without passing through the through-hole 310.

The connection member 500 is configured such that one side is fastened to the partition frame 210 and the other side is fastened to the bolt member 400. That is, the connection member 500 may be configured such that both sides are fastened to the partition frame 210 and the bolt member 400, and may be disposed between the partition frame 210 and the bolt member 400.

The connection member 500 may act as a spacer. That is, the connection member 500 may fix the partition frame 210 and the bolt member 400, and form a predetermined gap between the partition frame 210 and the bolt member 400.

A plurality of connection members 500 corresponding to the number of bolt members 400 may be disposed at positions corresponding to the positions of the bolt members 400. A plurality of connection members 500 may be disposed to be spaced apart from each other. The gap between a pair of adjacent connection members 500 may be formed differently from the gap between another pair of adjacent connection members 500. The connection members 500 may be disposed only in some portions of the partition frame 210 or in the entire area of the partition frame 210.

The connection member 500 may be formed in a columnar shape. Although the connection member 500 is configured in a cylindrical shape in FIG. 4, the connection member 500 is not limited thereto, and the connection member 500 may be configured in a polygonal column with a polygonal cross-section, such as a hexagonal column.

At least a portion of the connection member 500 is made of a high-temperature sensitive material whose properties change in a predetermined high-temperature environment, thereby weakening the retention force between the bolt member 400 and the partition frame 210. Here, the predetermined high-temperature environment may be, for example, an environment of 100 to 250 degrees C, and preferably, an environment of 150 to 200 degrees C. When a thermal event occurs inside the battery pack 10, a predetermined high-temperature environment may be created due to the discharge of venting gas and solid discharges, which may increase the internal pressure of the battery pack 10. Here, the change in the properties may indicate, for example, that the relevant material melts at high temperatures.

When a high-temperature and high-pressure thermal event occurs inside the battery pack 10, at least a portion of the connection member 500 may have a change in the properties, so that the fixing strength between the pack lid 300 and the partition frame 210 may deteriorate, making it possible to secure a space in which the pack lid 300 may bulge upward. Through this, thermal propagation may be prevented.

In the prior art, when manufacturing a battery pack 10, bolts and nuts made of steel/SUS were applied to the fastening portions between the pack case 200 and the pack lid 300. However, when a thermal event occurs in such a battery pack 10, the pack lid 300 is unable to bulge upward due to the strong bolting connection. That is, since the pack lid 300 of the conventional battery pack 10 is firmly fixed by the bolting connection, it is unable to bulge upward, so it is vulnerable to the thermal propagation.

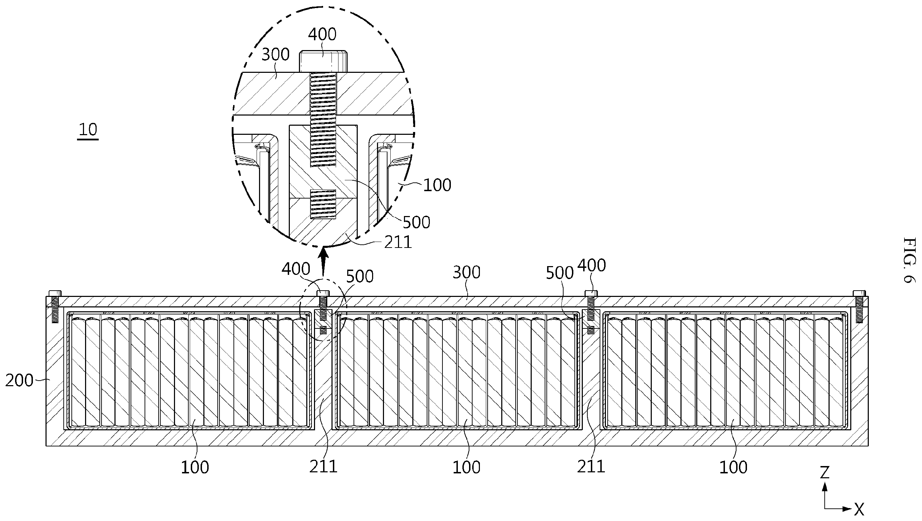

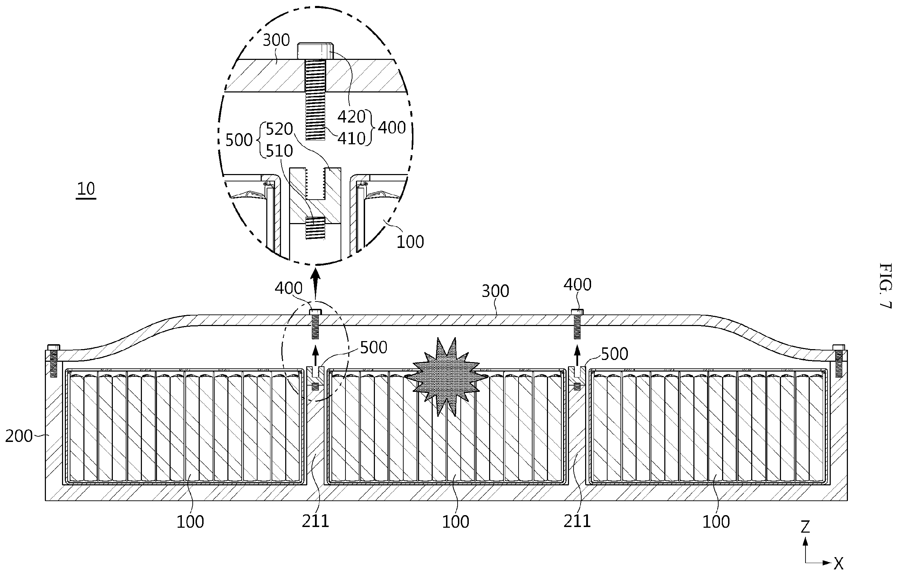

On the other hand, in the battery pack 10 according to an embodiment of the present disclosure, the bolt member 400 and the partition frame 210 may be coupled to each other through the connection member 500 to secure structural stability to an extent that meets vibration and impact test conditions in normal cases, whereas, in the event of a thermal event such as ignition of the battery cell 100, the retention force between the bolt member 400 and the partition frame 210 may be weakened, thereby allowing the pack lid 300 to bulge to prevent thermal propagation. This effect will be discussed in more detail in the description below with reference to FIGS. 6 and 7.

The high-temperature sensitive material constituting at least a portion of the connection member 500 may be configured as a resin material. The high-temperature sensitive material may be a moldable material. The melting point of the high-temperature sensitive material may be formed lower than the melting point of the material constituting the partition frame 210. The resin may absorb impact and vibration to maintain the coupled portions.

The resin may be a natural resin, a synthetic resin, or a high-strength resin, and may be a thermoplastic resin capable of melting in a high-temperature environment. The resin may be, for example, polycarbonate, polyurethane, polyester resin, etc., but these are only examples and it is not limited thereto. Here, the resin may have the property of melting or softening in a high-temperature environment, such as an environment of 100 to 250 degrees C, or may contain an additive that adjusts the melting point or glass transition temperature to fall within the range of the high-temperature environment. Preferred resins may include crystalline plastics belonging to the polyolefin series, such as polypropylene (PP). In addition, preferred resins may include engineering plastics such as MC (mono-casting) nylon or polyacetal, or ether and ester polyurethanes.

Polypropylene has a polyethylene molecular chain in which a methyl group (CH₃) is alternately attached to each carbon atom in the form of short branches regularly repeated. Polypropylene has the advantage of being very light with a specific gravity of 0.92, a high melting temperature of 135 to 160 degrees C, and a wide range of applications. In addition, polypropylene has the advantage of not being sticky when melting at high temperatures. Therefore, it may weaken the retention force between the bolt member 400 and the partition frame 210 through the connection member 500 in a predetermined high-temperature environment.

MC nylon has a structure in which imide bonds and ether bonds are mixed, and the imide bond provides appropriate heat resistance and strength, and the ether bond exhibits excellent processability. MC nylon has a strength similar to metal, is easier to process than general plastics, and is resistant to wear. It may withstand high temperatures up to 200 degrees C and melt at temperatures higher than that, thereby weakening the retention force between the bolt member 400 and the partition frame 210 through the connection member 500.

Polyacetal is a high-strength thermoplastic plastic with a hardness similar to metal. It withstands high temperatures of about 80 to 120 degrees C, but it has heat resistance capable of withstanding temperatures up to about 150 degrees C for continuous use for a short period of time, so it may be applied without difficulty in a temperature environment where the battery pack 10 is used in a normal state.

Male threads may be formed on one side of the connection member 500. A fastening hole 220 may be formed in the partition frame 210. The fastening hole 220 may be formed to have female threads to be engaged with the male threads of the connection member 500. For example, a bolt-like element may be formed on one side of the connection member 500, and the partition frame 210 may have a fastening hole 220 formed by tapping to be fastened to the bolt-like element, so that one side of the connection member 500 and the partition frame 210 may be fastened to each other by bolting. Here, one side of the connection member 500 may be understood as a portion corresponding to a first connection portion 510 to be described below, and the bolt-like element of the connection member 500 may be understood as a portion corresponding to a male portion 511 to be described below.

A hole may be formed on the other side of the connection member 500 to have female threads formed therein, and the screw portion 410 of the bolt member 400 may be fastened to the other side of the connection member 500. For example, the other side of the connection member 500 may function as a nut, so that the other side of the connection member 500 and the bolt member 400 may be bolted to each other. Here, the other side of the connection member 500 may be understood as a portion corresponding to a second connection portion 520 to be described below, and the hole on the other side of the connection member 500, where the female threads are formed, may be understood as a portion corresponding to a female portion 521 to be described below.

The pack lid 300 may be disposed above the partition frame 210, and in this case, the bolt member 400 may be disposed at a higher position than the partition frame 210 by the connection member 500. Specifically, one end of the bolt member 400 facing the partition frame 210 may be disposed at the same height as the uppermost end of the partition frame 210 or at a higher position than the uppermost end of the partition frame 210. Here, the uppermost end of the partition frame 210 may be understood as an end having a height corresponding to the upper end of the fastening hole 220. With such arrangement of the bolt member 400, the connection member 500 may be disposed between one end of the bolt member 400 and the uppermost end of the partition frame 210, so that the retention force between the bolt member 400 and the partition frame 210 may be more easily weakened in a predetermined high-temperature environment.

The connection member 500 may include a first connection portion 510 and a second connection portion 520. The first connection portion 510 is coupled to the partition frame 210. The first connection portion 510 may be a portion corresponding to one side of the connection member 500 described above. The second connection portion 520 extends from the first connection portion 510 so that the bolt member 400 is coupled thereto. The second connection portion 520 may be a portion corresponding to the other side of the connection member 500 described above.

The first connection portion 510 may include a male portion 511. The male portion 511 may be inserted into and fastened to the partition frame 210, and the male portion 511 may be configured in the form of a bolt. As described above, the partition frame 210 may have the fastening hole 220 formed such that the male portion 511 is to be fastened thereto, and the male portion 511 of the first connection portion 510 and the partition frame 210 may be coupled to each other by bolting.

The first connection portion 510 may be defined as a portion of the connection member 500 corresponding to a region occupied by the male portion 511. Specifically, based on the attached drawing, the first connection portion 510 may be defined as a portion of the connection member 500 corresponding to a region occupied by the male portion 511 from the lower end of the male portion 511 to the upper end of the male portion 511. In the case where the male portion 511 is partially inserted into the connection member 500, it may be defined as a portion of the connection member 500 corresponding to a region from the lower end of the male portion 511 to the upper end of the male portion 511 inserted into the connection member 500.

The first connection portion 510 may include a metal material. The male portion 511 of the first connection portion 510 may be formed of a metal material. For example, the male portion 511 of the first connection portion 510 may be configured as a metal bolt. Here, the metal may indicate a metal material such as steel/SUS. Such a material has high temperature resistance and excellent rigidity, thereby further securing high fastening strength between the connection member 500 and the partition frame 210.

The second connection portion 520 may include a female portion 521. The female portion 521 is a portion to which the bolt member 400 is fastened, and the female portion 521 may be configured as a hole having female threads formed therein to correspond to the screw portion 410 of the bolt member 400. That is, the female portion 521 may function as a nut for fastening with the bolt member 400, and the female portion 521 of the second connection portion 520 and the bolt member 400 may be bolted to each other.

The second connection portion 520 may be defined as a portion of the connection member 500 excluding the first connection portion 510. Specifically, based on the attached drawing, the second connection portion 520 may be defined as a portion of the connection member 500 corresponding to a region from the upper end of the connection member 500 to the upper end of the male portion 511.

The second connection portion 520 may be made of a high-temperature sensitive material. Therefore, the second connection portion 520 of the connection member 500 may change in its properties in a predetermined high-temperature environment, thereby weakening the retention force between the bolt member 400 and the partition frame 210.

As described above, the connection member 500 may include the first connection portion 510 including a metal material and the second connection portion 520 made of a high-temperature sensitive material. The first connection portion 510 and the second connection portion 520 may be made of different materials from each other. There is a technical difficulty in utilizing the characteristic in which the properties of only a portion of the connection member 500 change in a high-temperature environment by applying a heterogeneous material.

At least a portion of the second connection portion 520 may be exposed to the storage space S. Specifically, the second connection portion 520 may be made of a high-temperature sensitive material, and at least a portion of the outer surface of the second connection portion 520 may be exposed to the storage space S. In this case, when a thermal event occurs inside the battery pack 10, the second connection portion 520 may be directly exposed to a predetermined high-temperature environment created inside the storage space S, thereby preventing thermal propagation more effectively.

Here, the retention force between the bolt member 400 and the partition frame 210 may be weakened in the following two cases. The first case is that the retention force between the bolt member 400 and the connection member 500 is weakened while the partition frame 210 and the connection member 500 remain in the fixed state. In this case, the bolt member 400 and the connection member 500 are likely to be separated from each other (hereinafter referred to as a first state). The second case is that the retention force between the connection member 500 and the partition frame 210 is weakened while the bolt member 400 is fixed to the connection member 500. In this case, the connection member 500 and the partition frame 210 are likely to be separated from each other (hereinafter referred to as a second state).

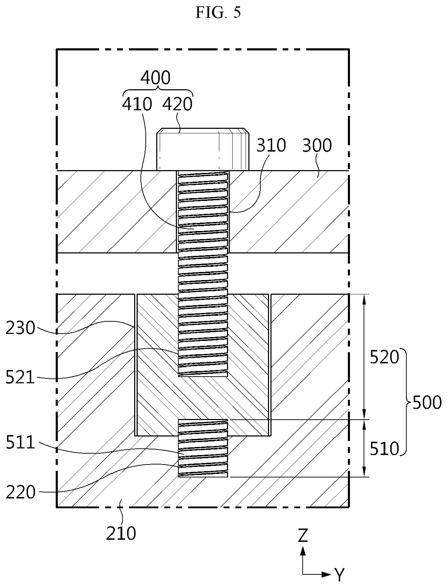

FIG. 5 is a cross-sectional view illustrating a bolt member and a connection member fastened in a battery pack when viewed from another direction according to an embodiment of the present disclosure.

Hereinafter, an insertion hole 230 of a battery pack 10 according to an embodiment of the present disclosure will be described in detail with reference to FIG. 5. The battery pack 10 according to an embodiment of the present disclosure may further have an insertion hole 230 formed in the partition frame 210. The insertion hole 230 may be formed such that the remaining portion of the connection member 500, excluding the male threads, is at least partially inserted thereinto. That is, the insertion hole 230 may be formed such that the remaining portion of the connection member 500, excluding the male portion 511, is at least partially inserted thereinto or such that at least a portion of the second connection portion 520 is inserted thereinto. The insertion hole 230 may preferably be formed such that the entire connection member 500 including its upper end is insertable thereinto. In this case, the fastening hole 220 may be formed inside the insertion hole 230. As the connection member 500 is inserted into the insertion hole 230, the gap between the pack lid 300 and the partition frame 210 may be reduced, so that the space efficiency of the storage space S of the battery pack 10 may be improved.

The insertion hole 230 may be formed to perforate the partition frame 210 in the thickness direction thereof. That is, the insertion hole 230 may be formed to extend in the X-axis direction and communicate with the storage space S. In this case, the connection member 500 may be directly exposed to the storage space S, thereby preventing thermal propagation more effectively.

Meanwhile, the connection member 500 may be provided with the first connection portion 510 and the second connection portion 520 that are respectively formed to be separated from each other, and then coupled to each other to be provided. In this case, the first connection portion 510 and the second connection portion 520 may be formed of different materials from each other. The connection member 500 may be configured, for example, such that the first connection portion 510 and the second connection portion 520 have a male portion (not shown) and a female portion (not shown), respectively, described above, and such that the male portion (not shown) of the second connection portion 520 is fastened to the female portion (not shown) of the first connection portion 510. In this case, there is an advantage in which the first connection portion 510 and the second connection portion 520 are replaceable or in which the total length of the connection member 500 is variable as needed.

FIG. 6 is a cross-sectional view taken along line A - A' in FIG. 1, and FIG. 7 is a cross-sectional view illustrating a state in which the pack lid in FIG. 6 bulges upward.

Hereinafter, the process in which the pack lid 300 of the battery pack 10 bulges according to an embodiment of the present disclosure will be described in detail with reference to FIGS. 6 and 7. FIG. 6 shows the battery pack 10 before the pack lid 300 bulges, and FIG. 7 shows the battery pack 10 with the pack lid 300 bulging.

The battery pack 10 in a normal state may have a cross-section shown in FIG. 6. The battery pack 10 according to an embodiment of the present disclosure may be configured such that the pack lid 300 bulges to the state shown in FIG. 7 when the internal pressure of the storage space S increases.

When a thermal event occurs inside the battery pack 10, high-temperature heat may be generated due to the discharge of venting gas and solid discharge, so that the internal pressure may increase. The high-temperature heat may be transferred to the bolt member 400, connection member 500, and partition frame 210 that are coupled to each other (see FIG. 6), and thus a predetermined high-temperature environment may be created in the connection member 500. In this high-temperature environment, the retention force between the bolt member 400 and the partition frame 210 may be weakened. At the same time, when the increased internal pressure of the pack case 200 acts on the pack lid 300, the bolt member 400 may be released and separated from the partition frame 210. Then, the pack lid 300 may be slightly spaced apart from the partition frame 210 to form a space therebetween, so that the increased internal pressure may be relieved. If the increased internal pressure of the battery pack 10 is not relieved and continues to be maintained, an event such as ignition in some battery cells 100 is likely to spread to other battery cells 100. However, according to the present disclosure, the pack lid 300 may be spaced by weakening the retention force between the bolt member 400 and the partition frame 210 to alleviate the increase in internal pressure, thereby preventing thermal propagation.

In addition, in the case where the pack lid 300 is made of a material capable of elastic deformation or plastic deformation by an external force, the pack lid 300 may further bulge in a direction in which the internal pressure is applied (see FIG. 7). As the pack lid 300 bulges, the volume of the space between the pack case 200 and the pack lid 300 may increase to relieve the increased internal pressure, and the venting gas or solid discharges may flow more smoothly. Through this, thermal propagation may be effectively delayed or prevented.

Although the first state in which the bolt member 400 is separated from the connection member 500 while the partition frame 210 and the connection member 500 remain fixed relative to each other is illustrated in FIG. 7, unlike what is illustrated in FIG. 7, the second state in which the connection member 500 is separated from the partition frame 210 while the bolt member 400 is fixed to the connection member 500 is also possible. In either case, the expansion of the pack lid 300 may be induced so that the gap between the pack lid 300 and the partition frame 210 is widened, thereby expanding the inner space of the battery pack 10 to alleviate the increase in internal pressure and delay or prevent thermal propagation. In addition, even when the gap between the pack lid 300 and the partition frame 210 is widened, the bolt member 400 may be maintained in the through-hole 310 of the pack lid 300, thereby blocking the inflow of oxygen or flame eruption through the through-hole 310. According to this structure of the battery pack 10, pack safety may be secured by preventing thermal propagation.

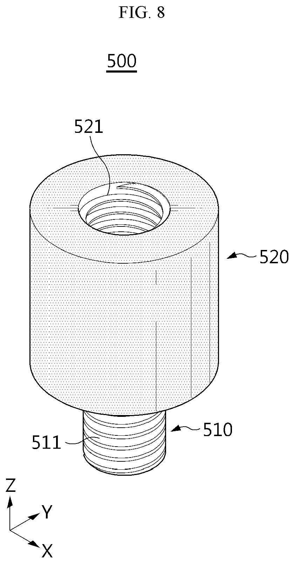

FIG. 8 is a perspective view illustrating a connection member of a battery pack according to another embodiment of the present disclosure.

Hereinafter, a connection member 500 of a battery pack 10 according to another embodiment of the present disclosure will be described in detail with reference to FIG. 8. The connection member 500 of the battery pack 10 according to another embodiment of the present disclosure includes the first connection portion 510 and the second connection portion 520, as described above in the battery pack 10 according to the embodiment of the present disclosure, but differs from the embodiment of the present disclosure in the material of the connection member 500.

The connection member 500 of the battery pack 10 according to another embodiment of the present disclosure may include the first connection portion 510 with a high-temperature sensitive material. For example, the male portion 511 of the first connection portion 510 may be made of a high-temperature sensitive material. In this case, the second connection portion 520 may include a metal material such as steel/SUS. In this case, when a thermal event occurs inside the battery pack 10, it may enter the second state in which the retention force between the first connection portion 510 and the partition frame 210 is weakened while the bolt member 400 and the second connection portion 520 remain fixed, so that the sealing degree between the pack lid 300 and the bolt member 400 may be improved.

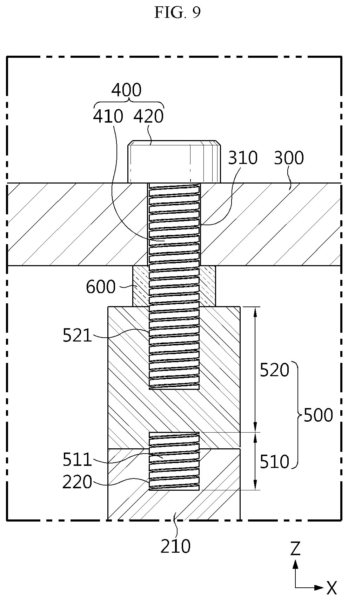

FIG. 9 is a cross-sectional view illustrating a state in which an intermediate member is further disposed on a bolt member and a connection member in a battery pack according to an embodiment of the present disclosure.

Hereinafter, an intermediate member 600 will be described in detail with reference to FIG. 9. The intermediate member 600 is disposed between the pack lid 300 and the connection member 500 such that the bolt member 400 passes therethrough. The intermediate member 600 may be made of a metal material such as steel/SUS. Such a material is resistant to high-temperatures and has excellent rigidity.

The intermediate member 600 may support the bolt member 400. The bolt member 400 may be supported and fixed by the intermediate member 600 before being fastened to the connection member 500.

The intermediate member 600 may support the pack lid 300 and the connection member 500. For example, the intermediate member 600 may support the pack lid 300 upward and support the connection member 500 downward. As described above, since the intermediate member 600 supports the pack lid 300 and the connection member 500, even if impact or vibration is applied to the battery pack 10, this may be effectively buffered, so that the structural stability may be further enhanced.

The intermediate member 600 may be in close contact with the pack lid 300 and the connection member 500. That is, the intermediate member 600 may be in close contact with the pack lid 300, and may also be in close contact with the connection member 500. The pack lid 300 and the connection member 500 may be spaced apart from each other while maintaining the gap therebetween by the intermediate member 600. The intermediate member 600 may also seal the gap between the pack lid 300 and the connection member 500.

The intermediate member 600 may be configured as a bonding nut having female threads formed on its inner surface and at least a portion bonded to the pack lid 300. The screw portion 410 of the bolt member 400 may be fastened to the female threads of the bonding nut. The bonding nut may be bonded and fixed to the pack lid 300, and the upper end of the bonding nut may be bonded to the bottom surface of the pack lid 300. As described above, in the case where the intermediate member 600 is configured as a bonding nut coupled to the pack lid 300, the retention force between the bolt member 400 and the connection member 500 may be further strengthened. The bolt member 400 may be fastened to the bonding nut that is fixed to the pack lid 300, and as a result, the bolt member 400 may be fixed to the pack lid 300 in advance. The bolt member 400 pre-fixed to the pack lid 300 may be sequentially coupled to the connection member 500.

That is, in the state where a plurality of intermediate members 600 are fixed to the bottom surface of the pack lid 300, a plurality of bolt members 400 may be pre-fixed to the pack lid 300 through the intermediate members 600. Then, as the pack lid 300 is disposed to cover the opening O of the pack case 200, the plurality of bolt members 400 may be fastened to the plurality of connection members 500 at once. Therefore, there is no need to respectively align and connect the bolt members 400, thereby improving the assemblability and assembly accuracy of the battery pack 10.

In addition, even in a situation where a thermal event occurs inside the battery pack 10, and thus the bolt member 400 and the partition frame 210 are separated from each other, the bolt member 400 may still remain fixed to the pack lid 300, thereby preventing the bolt member 400 from being separated from the pack lid 300 or popping out of the pack lid 300. Therefore, even when the gap between the pack lid 300 and the partition frame 210 is widened in a high-temperature environment, the bolt member 400 may be reliably maintained fastened to the intermediate member 600 in the through-hole 310 of the pack lid 300, thereby blocking the inflow of oxygen or flame eruption through the through-hole 310.

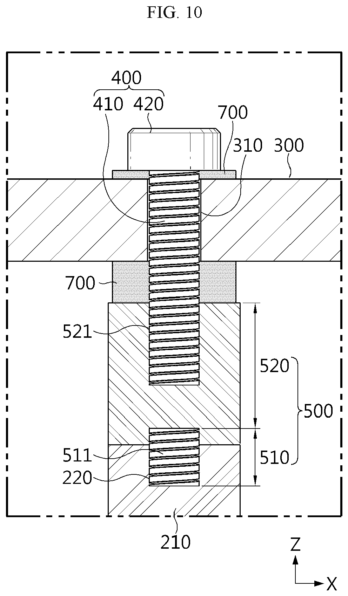

FIG. 10 is a cross-sectional view illustrating a state in which a sealing member is further disposed on a bolt member and a connection member in a battery pack according to an embodiment of the present disclosure.

Hereinafter, a sealing member 700 will be described in detail with reference to FIG. 10. The sealing member 700 is configured to seal the gap between the pack lid 300 and the bolt member 400. Unlike the high-temperature sensitive material described above, the sealing member 700 may be formed of a material capable of maintaining its properties even at high-temperatures.

The sealing member 700 may be disposed on the outer side of the pack lid 300, which is far from the partition frame 210. The sealing member 700 may be disposed between the head 420 of the bolt member 400 and the outer side of the pack lid 300.

The sealing member 700 may also be disposed on the inner side of the pack lid 300. In this case, the sealing member 700 may be disposed between the inner side of the pack lid 300 and the connection member 500.

Although not shown in FIG. 10, the sealing member 700 may also be disposed inside the through-hole 310 of the pack lid 300.

The conventional battery pack 10 has a disadvantage in that it was vulnerable to thermal propagation due to the inflow of oxygen or the eruption of flame through the bolting hole for bolting. In the battery pack 10 according to an embodiment of the present disclosure, the sealing member 700 may implement a seal between the bolt member 400 and the pack lid 300, thereby effectively preventing the inflow of oxygen or the eruption of flame and thermal propagation.

Meanwhile, a combination of the configurations in FIGS. 9 and 10 is also possible. That is, a battery pack 10 equipped with both the intermediate member 600 and the sealing member 700 may also be implemented. In this case, a portion of the sealing member 700 may be configured to seal the gap between the pack lid 300 and the intermediate member 600 and/or the gap between the intermediate member 600 and the connection member 500.

The battery pack 10 according to the present disclosure, although not shown in the drawings, may further include various devices for controlling charging and discharging of battery cells 100, such as a BMS (Battery Management System), a current sensor, a fuse, and the like.

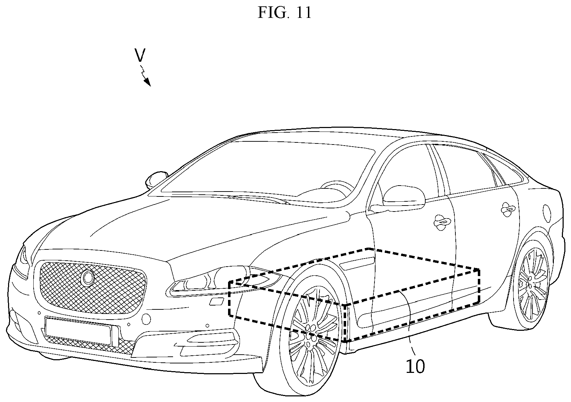

FIG. 11 is a drawing illustrating a vehicle according to an embodiment of the present disclosure.

Hereinafter, referring to FIG. 11, the battery pack 10 according to the present disclosure may be applied to a vehicle V such as an electric vehicle or a hybrid vehicle. That is, the vehicle V according to the present disclosure may include the battery pack 10 according to the present disclosure. The battery pack 10 may be installed in the body frame under the vehicle seat or in the trunk space, and when installed in the vehicle, the arrangement order of the battery pack 10 may be reversed as needed.

Although terms indicating directions such as up, down, left, right, front, and back directions are used in this specification, it is obvious to those skilled in the art to which the present disclosure pertains that these terms are only for convenience of explanation with reference the relevant drawings and may vary depending on the position of the target object or the position of the observer.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

### [Description of Reference numerals]

10: Battery pack
100: Battery cell
200: Pack case
201: Bottom
202: Side wall
210: Partition frame
211: Horizontal frame
212: Vertical frame
220: Fastening hole
230: Insertion hole
300: Pack lid
400: Bolt member
410: Screw portion
420: Head
500: Connection member
510: First connection portion
511: Male portion
520: Second connection portion
521: Female portion
600: Intermediate member
700: Sealing member
O: Opening
S: Storage space
V: Vehicle

## Claims

1. A battery pack comprising:
a pack case having a storage space configured to store a plurality of battery cells therein and an opening formed on one side;
a pack lid configured to cover the opening;
a partition frame coupled to the pack case so as to partition the storage space;
a bolt member having at least a portion passing through the pack lid, and coupled to the partition frame; and
a connection member having one side fastened to the partition frame and the other side fastened to the bolt member,
wherein at least a portion of the connection member is formed of a high-temperature sensitive material configured to change in its properties in a predetermined high-temperature environment, thereby weakening retention force between the bolt member and the partition frame.

2. The battery pack according to claim 1,
wherein the pack lid
is configured to bulge when internal pressure of the storage space increases.

3. The battery pack according to claim 1,
wherein the high-temperature sensitive material
is configured as a resin material.

4. The battery pack according to claim 1,
wherein the pack lid is disposed above the partition frame, and
wherein the bolt member
is disposed at a higher position than the partition frame by the connection member.

5. The battery pack according to claim 1,
wherein the connection member comprises
a first connection portion fastened to the partition frame, and
a second connection portion coupled to the first connection portion and to which the bolt member is fastened, and
wherein the second connection portion is made of the high-temperature sensitive material.

6. The battery pack according to claim 5,
wherein the second connection portion
has at least a portion exposed to the storage space.

7. The battery pack according to claim 5,
wherein the first connection portion
comprises a metal material.

8. The battery pack according to claim 1,
wherein male threads are formed on one side of the connection member, and
wherein the partition frame has a fastening hole formed to have female threads formed to be fastened to the male threads of the connection member.

9. The battery pack according to claim 8,
wherein the partition frame
has an insertion hole formed therein such that a remaining portion of the connection member, excluding the male threads, is at least partially inserted thereinto, and
wherein the fastening hole is formed inside the insertion hole.

10. The battery pack according to claim 1,
wherein the connection member comprises
a first connection portion fastened to the partition frame, and
a second connection portion coupled to the first connection portion and to which the bolt member is fastened, and
wherein the first connection portion comprises the high-temperature sensitive material.

11. The battery pack according to claim 1, further comprising
an intermediate member disposed between the pack lid and the connection member, and through which the bolt member passes.

12. The battery pack according to claim 11,
wherein the intermediate member
is in close contact with the pack lid and the connection member.

13. The battery pack according to claim 11,
wherein the intermediate member
is configured as a bonding nut having female threads formed on its inner side and at least a portion bonded to the pack lid.

14. The battery pack according to claim 1, further comprising
a sealing member disposed between the pack lid and the bolt member to seal them.

15. A vehicle comprising at least one battery pack according to any one of claims 1 to 14.
